# EUROPÄISCHE PATENTSCHRIFT

(11) **EP 0 902 267 B1**
(45) Veröffentlichungstag und Bekanntmachung des Hinweises auf die Patenterteilung: **11.06.2003**
(21) Anmeldenummer: 98810812.2
(22) Anmeldetag: 20.08.1998
(51) Int. Cl.: G01L 19/02, G01L 23/10

(54) **Beschleunigungskompensierter Druckaufnehmer**
Pressure transducer with compensation for acceleration effects
Capteur de pression à compensation des effets d'accélération

(30) Priorität: 15.09.1997 CH 217197
(43) Veröffentlichungstag der Anmeldung: 17.03.1999
(73) Patentinhaber: K.K. HOLDING AG, CH-8408 Winterthur (CH)
(72) Erfinder: Engeler, Paul, 8500 Frauenfeld (CH)

(56) Entgegenhaltungen:
- GB-A- 1 194 071
- US-A- 3 651 353
- US-A- 4 604 544

## Beschreibung

Die Erfindung betrifft einen beschleunigungskompensierten Druckaufnehmer gemäss Oberbegriff von Anspruch 1.

Für die Messung dynamischer Druckvorgänge in gasförmigen oder flüssigen Medien, insbesondere an Motoren und Turbo-Systemen, sind Druckaufnehmer gefragt, welche direkt in die vibrierenden Gehäusewände solcher Maschinen montiert werden können, ohne dass sie deren Beschleunigungskräfte in das zu messende Drucksignal einstreuen. Üblicherweise werden für solche Messungen piezoelektrische Druckaufnehmer verwendet, besonders wenn es sich um hochdynamische Vorgänge oder um Messungen in Temperaturbereichen von über 200°C handelt.

In einzelnen Anwendungsfällen genügt es, wenn die Druckaufnehmer mittels elastisch gelagerten Adaptern in die vibrierenden Maschinenwände eingebaut werden. In höheren Temperaturbereichen ist dies meist nicht möglich, so dass zur separaten Erfassung der Beschleunigungkräfte seit Jahren piezoelektrische Beschleunigungselemente in die Druckaufnehmer integriert werden. Dazu ist ein hoher technischer Aufwand nötig, weil ein zusätzliches Piezoelement, meist in Form von einer oder mehreren Kristallplatten, in Gegenschaltung zum Drucksignal-Kristallsatz, eingebaut werden muss. Dadurch reduziert sich das Nutzdrucksignal um mindestens 1/3 des Maximalwertes, was ein weiterer grosser Nachteil ist, weil in vielen Fällen Amplituden von wenigen Millibar gemessen werden müssen. Zudem hat sich gezeigt, dass die mit den bekannten Gegenmitteln erreichte Beschleunigungskompensation sehr stark beeinflusst werden kann, durch Stecker- oder Metallkabelanschlüsse, d.h. wenn zusätzliche Massen an das Druckaufnehmergehäuse angeschlossen werden.

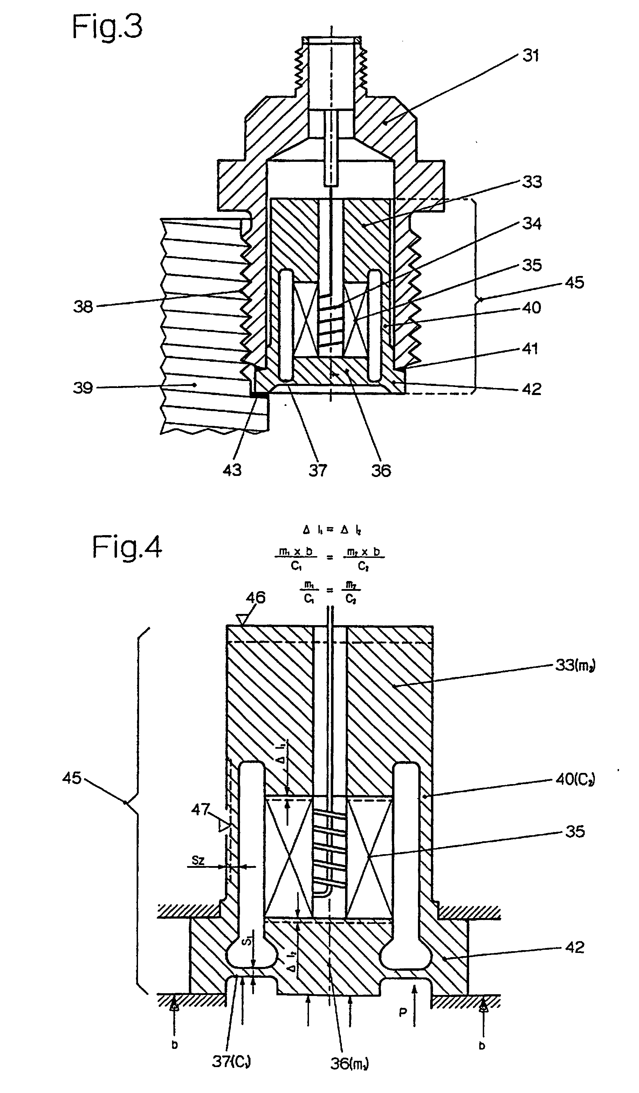

Aufgabe der Erfindung ist es, Druckaufnehmer der genannten Art technisch zu vereinfachen und den Einflüssen der verschiedenen Anschlussmethoden zu entziehen. Diese Aufgabe wird mittels der Merkmale im Kennzeichen von Anspruch 1 gelöst. Durch die Aufteilung des Druckaufnehmers in einen messenden Innenteil und einem gehäuseartigen Aussenteil, die beide nur an der Membran-Flanschpartie miteinander verbunden sind, wird ein frei schwingendes Mess-System erhalten, das unabhängig vom Einbaugehäuse misst, schwingt und Beschleunigungen und Vibrationen kompensiert, wie später noch anhand von Fig. 4 erläutert wird.

Eine ähnliche Lösung wurde in der US 4.604.544 beschrieben.

Im Folgenden wird die Erfindung anhand von Ausführungsbeispielen im Zusammenhang mit der Zeichnung näher erläutert.

Es zeigen:
Fig. 1 Herkömmlicher piezoelektrischer Druckaufnehmer, mit zwei in Serie gegeneinander geschalteten Kristallsätzen, schematisch im Schnitt.
Fig. 2 Herkömmlicher piezoelektrischer Druckaufnehmer, mit zwei Kristallsätzen, die ebenfalls gegeneinander geschaltet sind, und dessen Masse m2 bearbeitbar ist.
Fig. 3 Erfindungsgemässer piezoelektrischer Druckaufnehmer, schematisch im Schnitt.
Fig. 4 Erfindungsgemässer Innenteil des Druckaufnehmers nach Fig. 3, schematisch im Schnitt.
Fig. 5 Erfindungsgemässer piezoelektrischer Druckaufnehmer, mit Metallkabelanschluss und einer Variante in der Flansch-Schweissung, schematisch im Schnitt.
Fig. 6 Eine Variante eines Innenteils des Druckaufnehmers mit aufschraubbarer Schwermetallmasse, schematisch im Schnitt.
Fig. 7 Erfindungsgemässer piezoelektrischer Druckaufnehmer mit Variante in der Membranschweissung und der Seitenabstützung des Innenteils.
Fig. 8 Erfindungsgemässer piezoelektrischer Druckaufnehmer, eingebaut auf Shakerzange, mit Direktanzeige der Feinkompensation.

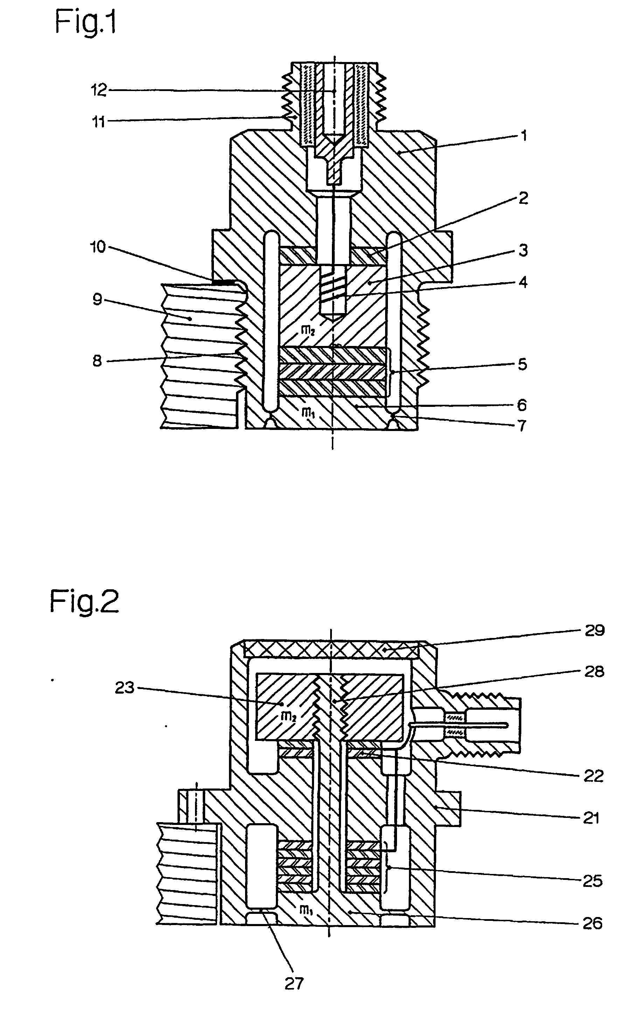

Fig. 1 und Fig. 2 zeigen piezoelektrische Druckaufnehmer, wie sie in den letzten 20 Jahren zu Tausenden gebaut wurden und weiter gebaut werden.

Fig 1 zeigt den Querschnitt eines beschleunigungs-kompensierten Durckaufnehmers der einfacheren Art, wobei 1 das Druckaufnehmer-Gehäuse ist. Der Kompensations-Kristallsatz 2 ist in Form einer Piezoplatte gezeigt. Die Kompensationsmasse 3 ist als Elektrode ausgebildet und schliesst die Kontaktfeder 4 ein. Der Mess-Kristallsatz 5 ist in Form von drei Piezoplatten gezeigt, entsprechend einem bekannten Handelsmuster.

Die Membranbodenmasse 6 ist die Masse m1, während 3 die Masse m2 darstellt. Diese beiden Massen sind so bemessen, dass eine optimale Beschleunigungskompensation erreicht wird. Die Membrane 7 verbindet das mit Montagegewinde 8 versehene Druckaufnehmergehäuse 1 mit der Masse 6. Üblicherweise wird das Gehäuse 1 mittels Dichtring 10 gegen die Maschinenwand 9 abgedichtet. Mit 11 ist ein Steckergewinde für den Anschluss eines Kabelsteckers bezeichnet; 12 ist eine Kontakthülse für die Aufnahme des Steckers.

Fig. 2 zeigt eine kompliziertere Form eines piezoelektrischen Druckwandlers, wie er vor allem in Turbinen verwendet wird. Die Kompensationsmasse 23 ist mittels Schraube 28 mit der Membranbodenmasse 26 verbunden, welche über die Membrane 27 mit dem Gehäuse 21 verbunden ist. Der Mess-Kristallsatz 25 besteht aus einer Mehrzahl von Piezoscheiben, deren Signale seitlich mittels Metallelektroden abgenommen werden. Der entgegengeschaltete Kompensations-Kristallsatz 22 ist mit zwei Piezoplatten dargestellt, zwischen denen eine Elektrode mit der Signalleitung, die zum Stecker führt, verbunden ist. Bei geöffnetem Deckel 29 kann die Kompensationsmasse 23 im fertig montierten Zustand angepasst werden, was gegenüber Fig. 1 ein Vorteil ist.

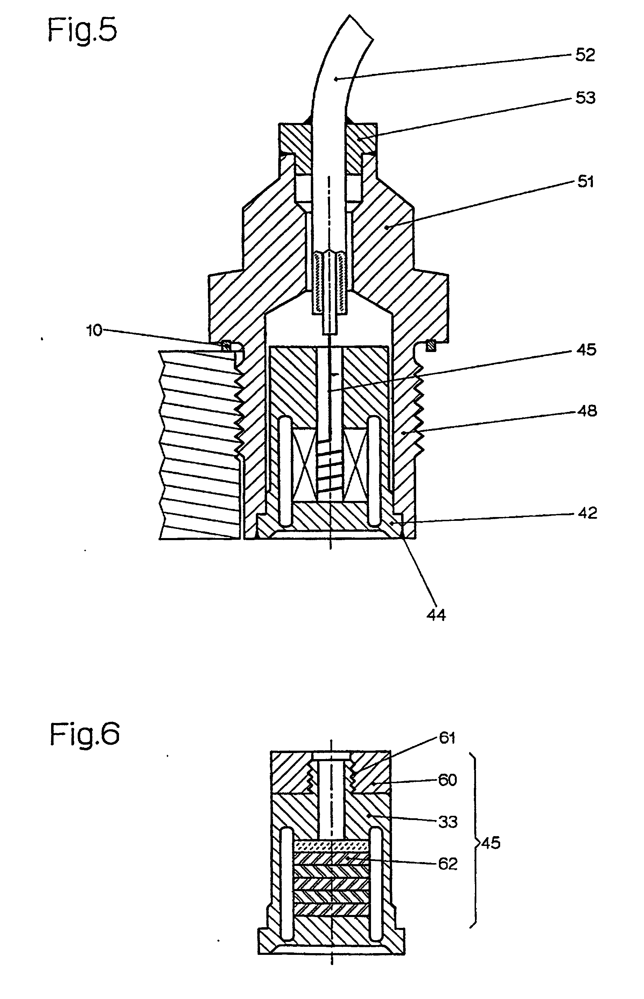

Fig. 3 zeigt schematisch einen erfindungsgemässen Druckaufnehmer mit dynamischer Kompensation, ohne zusätzlich nachgeschalteten Kristallsatz. Der Gehäuseaussenteil 31 umgibt den Innenteil 45, bestehend aus der Auflage-Kompensationsmasse 33, dem Mess-Kristallsatz 35 und der Membranbodenmasse 36, die über die Membrane 37 mit dem Flansch 42 verbunden ist. Die Innenwandhülse 40, die auch durch einzelne Stege ersetzt sein kann, bindet die Kompensationsmasse 33 ebenfalls an den Flansch 42. So entsteht eine geschlossene Einheit, in der der eingeschlossene Kristallsatz 35 unter mechanischer Vorspannung steht. Der Innenteil 45 wird nach Grob- oder Feinkompensation der Beschleunigungs-Empfindlichkeit in den Gehäuseaussenteil 31 eingesteckt und mittels Schweissung 41 mit diesem über den Flansch 42 verbunden. Damit ist die Membranpartie 37 fest mit dem Gehäuseaussenteil 31 und somit über das Montagegewinde 38 mit der Maschinenwand 39 der Einbaustelle verbunden. Das Mess-System, das im Innenteil 45 untergebracht ist, kann in axialer Richtung frei schwingen, da er nirgends die Gehäusewand 31 berührt. Der Messkristallsatz 35 besteht hier aus transversal geschnittenen Kristallelementen, in deren Mitte die Kontaktfeder 34 elastisch die Signalableitung zum Stecker besorgt. Wie in Fig. 6 gezeigt, kann auch ein Kristallsatz, bestehend aus longitudinal geschnittenen oder keramischen Piezoplatten, Verwendung finden.

Membrane 37 und Innenwandhülse 40 sind als Federelemente bestimmter Steifigkeit wirkende Verbindungselemente zwischen den Massen 36(m1) und 33(m2) sowie dem Flansch 42. Ihre Steifigkeit c1 bzw. c2 können gegebenenfalls durch Materialabtrag abgestimmt werden, um, wie nachstehend gezeigt, in Verbindung mit einer Abstimmung der Massen m1 und m2 eine Kompensation von Beschleunigungs- und Vibrationskräften zu bewirken. Da jedoch ein Eingriff an der Membrane 37, die darüber hinaus eine gewisse Mindeststeifgkeit haben muss, relativ schwierig ist, erfolgt ein Materialabtrag zur Abstimmung der Steifigkeiten vorzugsweise an der Innenwandhülse 40.

Fig. 4 zeigt das Grundkonzept des neuen erfindungsgemässen dynamisch kompensierten Messteils. Der Innenteil 45 hängt frei an der Einspannstelle des Flansches 42, an welchem das Mess-System auf den Shaker gespannt wird, wie angedeutet. Wirkt nun eine Beschleunigung b von unten auf den Flansch 42, so legt dieser einen gewissen Weg nach oben pro Zeiteinheit zurück. Dabei erfahren die Massen 36 und 33 aufgrund ihrer Trägheit und der "Federung" der Elemente 37 und 40 je eine Mikroverdrängung Δl₂ bzw. Δl₁ relativ zum Flansch 42 und zu dem mit ihm verbundenen Gehäuse-Aussenteil 31 nach unten. Werden nun die Werte der Grössen m1,m2,c1,c2 erfindungsgemäss so aufeinander abgestimmt, dass Δl₁ = Δl₂ (Fig. 4) ist, dann erzeugt die Beschleunigung b kein Messsignal im Kristallsatz, da dieser nicht belastet wird. Dagegen erzeugt ein Mediumdruck p auf die Membranbodenmasse 36 und die Membrane 37 eine Verdrängung nach oben, die aber durch die Innenwandhülse 40 praktisch nicht weitergeleitet wird, sondern im Flansch 42 gelagert ist. Durch Nichtbewegung der Auflage-Kompensationsmasse 33 entsteht somit durch Kompression des Kristallsatzes 35 ein Messsignal.

Durch geeignete Abstimmung der Steifigkeiten c1 und c2 und/oder der Massen 33 bzw. 36 kann in einem ausgewählten Frequenzbereich auf diese Weise eine Beschleunigungs-Kompensation, ohne zusätzlichen separaten Kristallsatz, erreicht werden. Der ausgewählte Frequenzbereich wird zweckmässig so definiert, dass er den Messbereich des Druckaufnehmers 31 weitgehend überdeckt. Damit ist eine wesentliche konstruktive Vereinfachung möglich und somit auch ein wirtschaftlicher Fortschritt erreicht. Ganz besonders ist aber auch jeder Einfluss von äusseren Kräften auf Stecker und Gehäuse 31 minimiert.

Ergänzend sei noch erwähnt, dass der Grund für eine Mindeststeifigkeit c1 der Membrane 37 darin besteht, dass die Auflage-Kompensationsmasse 33 nicht beliebig gross gemacht werden kann, die ja, wie in Fig. 4 gezeigt, zur Masse 36 (ml) und den Steifgkeiten c1 und c2 in einer bestimmten Relation stehen muss. Weiterhin sollte die Steifigkeit c2 der Innenwandhülse 40 so gross wie aufgrund der in Fig. 4 gezeigten Beziehung möglich gemacht werden, um eine Weiterleitung einer zu messenden Mediumdruck-Belastung auf die Masse 33 so weit wie möglich zu unterbinden. Dadurch kann die Empfindlichkeit des erfindungsgemässen Druckkraftaufnehmers optimiert werden.

Fig. 5 zeigt einen weiteren erfindungsgemässen Druckaufnehmer 51, mit Ausführungsvarianten. Anstelle einer Steckerverbindung ist ein Metallkabel 52 über den Schweissflansch 53 mit dem Druckaufnehmer 51 integriert. Anstelle der Frontdichtung von Fig. 3 ist die Dichtung 10 unter dem 6-Kant angebracht, dem ein massiver Gewindeteil 48 folgt. Der Innenteil 45 mit dem Flansch 42 ist mit dem Gewindeteil 48, mittels Schweissung 44, frontal verbunden. Diese Bauart wird für Niederdruck-Anwendung bevorzugt.

Fig. 6 zeigt eine Variante eines Innteils 45. Um Platz zu sparen, ist eine Zusatzmasse 60 auf der Auflage-Kompensationsmasse 33 aufgebracht, z.B. mit einem Gewinde 61, für den Fall eines Materials, das nicht schweissbar ist, wie z.B. ein Schwermetall auf Wolframbasis. Anstelle des Transversal-Kristallsatzes 35, ist ein Platten-Kristallsatz 62 gezeigt, der aus keramischen Piezoplatten oder Einkristallplatten besteht. Entsprechend muss die Signalabnahme von der obersten Platte aus gestaltet sein.

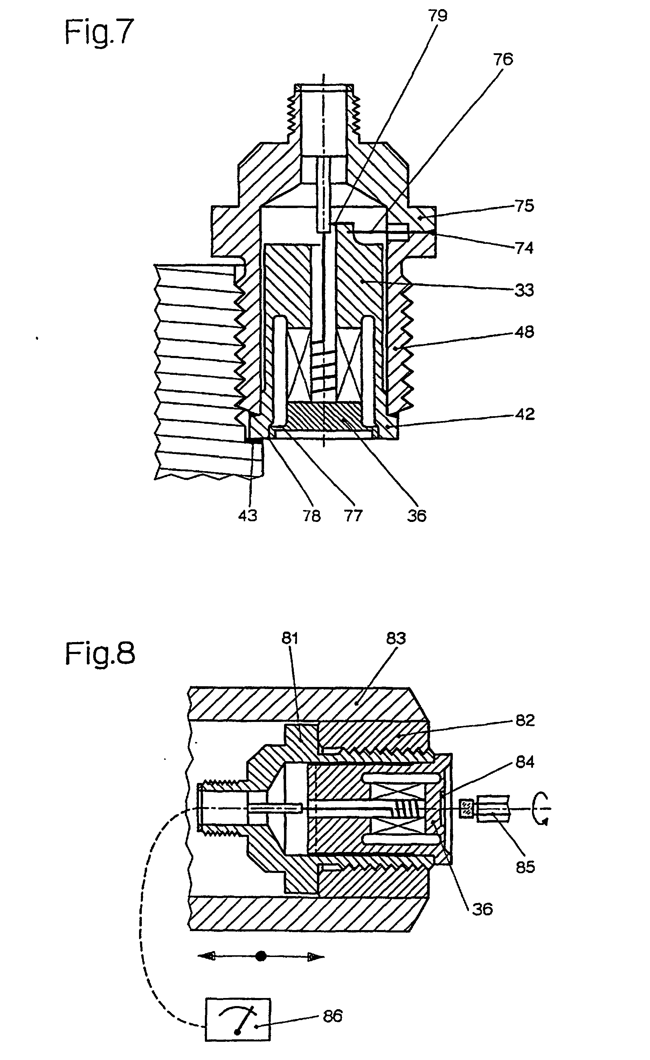

Fig. 7 zeigt weitere Varianten erfindungsgemässer Ausführungen. Die Membrane 77 ist mittels Frontal-Schweissung 78 mit dem Flansch 42 verbunden. In Einbauten, wo hohe Seitenbeschleunigungen wirken, ist ein seitliches Auslenken der Kompensationsmasse 33 durch eine auf der rechten Seite angedeuteten Querabstützmembrane 76 erschwert, die im Trennteil 75 mittels Schweissung 74 eingeklemmt ist.

Fig. 8 zeigt das Verfahren der Feinabstimmung vor der Abnahmeprüfung. Dazu ist der Druckaufnehmer mit Anschlussleitung am Kompensations-Anzeigegeräts 86 angeschlossen und mit seinem Gehäuse-Aussenteil 81 in der Spannhülse 83 des Shakers, mittels Gewindehülse 82, montiert. Schrittweise wird nun mit Fräs- oder Schleifwerkzeug 85 Material aus der Feinkompensationsmulde 84 der Membranbodenmasse 36 abgetragen, bis das Anzeigegerät 86, bei eingeschaltetem Shaker, den Optimalwert ergibt. Damit können alle Druckaufnehmer einer Serie auf spezifizierte Werte der Beschleunigungs-Kompensation gebracht werden.

Die Erfindung ermöglicht somit einen bedeutenden Fortschritt durch eine wesentliche konstruktive Vereinfachung sowie durch völlige Unabhängigkeit des Kompensationsgrads von äusseren Krafteinflüssen auf das Druckaufnehmergehäuse, z.B. durch Kabel verschiedener Längen, die eigene Schwingungen einleiten können.
Fig.1
   - 1: Druckaufnehmer-Gehäuse
   - 2: Kompensations-Kristallsatz
   - 3: Kompensationsmasse m2
   - 4: Kontaktfeder
   - 5: Mess-Kristallsatz
   - 6: Membranbodenmasse m1
   - 7: Membrane
   - 8: Montagegewinde
   - 9: Maschinenwand
   - 10: Dichtring
   - 11: Steckergewinde
   - 12: Kontakthülse
Fig. 2
   - 21: Druckaufnehmer-Gehäuse
   - 22: Kompensations-Kristallsatz
   - 23: Kompensationsmasse m2
   - 25: Mess-Kristallsatz
   - 26: Membranbodenmasse m1
   - 27: Membrane
   - 28: Schraube
   - 29: Deckel
Fig. 3
   - 31: Druckaufnehmer-Gehäuseaussenteil
   - 33: Auflage-Kompensationsmasse m2
   - 34: Kontaktfeder
   - 35: Mess-Kristallsatz, Transversaltyp
   - 36: Membranbodenmasse m1
   - 37: Membrane
   - 38: Montagegewinde
   - 39: Maschinenwand
   - 40: Innenwandhülse
   - 41: Schweissung, radial
   - 42: Flansch
   - 43: Dichtring
Fig. 4
   - 45: Innenteil bestehend aus:
   - 33: Auflage-Kompensationsmasse m2
   - 40: Innenwandhülse mit Steifigkeit C2
   - 36: Membranbodenmasse m1
   - 37: Membrane mit Steifigkeit C1
   - 35: Mess-Kristallsatz, transversal
   - b: Beschleunigungsvektor
   - p: Mediumdruck
   - Δl₁: Mikroverdrängung
   - Δl₂: Mikroverdrängung
   - 46: Abtragstelle Masse m2
   - 47: Abtragstelle Innenwandhülse zur Veränderung der Steifigkeit C2
Fig. 5
   - 51: Druckaufnehmer Gehäuseaussenteil
   - 52: Metallkabel
   - 53: Schweissflansch
   - 45: Druckaufnehmer Innenteil
   - 42: Flansch, Verbindung Innenteil-Aussenteil
   - 44: Schweissung frontal
   - 48: Gewindeteil
Fig. 6
   - 45: Innenteil
   - 60: Zusatzmasse
   - 61: Aufschraubgewinde
   - 62: Mess-Kristallsatz, longitudinal Platten
Fig. 7
   - 79: Membranträger
   - 76: Querabstützmembran
   - 75: Deckel
   - 74: Schweissung
   - 77: Membran
   - 78: Frontal-Schweissung
   - 43: Dichtring
Fig. 8
   - 81: Druckaufnehmer-Gehäuseaussenteil
   - 82: Gewindehülse
   - 83: Spannhülse des Shakers
   - 84: Feinkompensationsmulde in Membranbodenmasse m1
   - 85: Fräs- oder Schleifwerkzeug
   - 86: Kompensations-Anzeige-Gerät

## Patentansprüche

1. Beschleunigungskompensierter Druckaufnehmer, beispielsweise zur Messung von dynamischen Vorgängen in gasförmigen oder flüssigen Medien, bei welchem ein Druckmesselement (5,25,35,62) zwischen zwei Massen (4,6;23,26;33,36;) unter Vorspannung eingebaut ist, **dadurch gekennzeichnet, dass** die Massen (33,36) und das Messelement (35,62) lediglich am Einbauende über einen Flansch (42) mit einem gehäuseartigen Aussenteil (31,51) verbunden sind, dass ferner die Massen [36(m1),33(m2)] über Verbindungselemente (40,37;77) mit abgestimmten Steifigkeiten (c1,c2) mit dem Flansch (42) zu einem von äusseren mechanischen Einflüssen entkoppelten Innenteil (45) vereinigt sind, und dass schliesslich im vormontierten Innenteil (45) Massen (m1,m2) und/oder Steifigkeiten (c1,c2) durch Materialabtrag oder -auftrag so aufeinander abgestimmt sind, dass Beschleunigungs- resp. Vibrations-Einflüsse höchstens ein minimales Störsignal ergeben.

2. Druckaufnehmer nach Anspruch 1, **dadurch gekennzeichnet, dass** der Flansch (42) gleichzeitig als Dichtfläche beim Einbau in eine Maschinenwand (39) dient.

3. Druckaufnehmer nach Anspruch 1 oder 2, **dadurch gekennzeichnet, dass** der Flansch (42) frontal in einen Gewindeteil (48) des Aussenteils (31,54) eingebaut, z.B. eingeschweisst, ist.

4. Druckaufnehmer nach einem der Ansprüche 1 bis 3, **dadurch gekennzeichnet, dass** eines (40) der Verbindungselemente (40,37;77) aus einem geschlossenen Rohr oder aus käfigartig angeordneten Stegen besteht, während das andere (37;77) eine Membrane mit einer vorgewählten Mindeststeifigkeit (c1) ist.

5. Druckaufnehmer nach Anspruch 4, **dadurch gekennzeichnet**, dassdie Membrane (77) einstückig mit der Membranbodenmasse (36) frontal in den Flansch (42) eingebaut, z.B. eingeschweisst, ist.

6. Druckaufnehmer nach einem der vorstehenden Ansprüche, **dadurch gekennzeichnet, dass** das Druckmesselement ein unter mechanischer Vorspannung eingebauter Kristallsatz (35) aus piezoelektrischer Keramik oder aus piezoelektrischen Einkristallen ist.

7. Druckaufnehmer nach Anspruch 6, **dadurch gekennzeichnet, dass** ringförmig aufgebaute Kristallsätze (35) oder plattenförmig (62) aufgebaute Kristallsätze eingebaut sind, die bis in die Bereiche von 800°C verwendbar sind.

8. Druckaufnehmer nach einem der Ansprüche 1 bis 5, **dadurch gekennzeichnet**, das das Druckmesselement nach dem piezoresistiven, kapazitiven oder optischen Prinzip arbeitet.

9. Druckaufnehmer nach einem der vorhergehenden Ansprüche, **dadurch gekennzeichnet, dass** der Innenteil (45) über eine Querstabilisierungsmembrane (76) zusätzlich mit dem Aussenteil (51) verbunden ist.

10. Verfahren zur Grob- oder Feinabstimmung der Beschleunigungskompensation eines beschleunigungskompensierten Druckaufnehmers nach einem der Ansprüche 1 bis 9, **dadurch gekennzeichnet, dass** das Druckmesselement (45) mit der Flanschpartie (42) auf einen Shaker gespannt wird und mindestens einer der massgebenden Parameter, Massen (m1, m2) der beiden Massen (33, 36) und Steifigkeit (c1, c2) der Verbindungselemente (37, 40), dem Messresultat entsprechend verändert wird.

11. Verfahren zur Feinabstimmung der Beschleunigungskompensation eines beschleunigungskompensierten Druckaufnehmers nach einem der Ansprüche 1 bis 9, **dadurch gekennzeichnet, dass** der fertig montierte Druckaufnehmer auf einen Shaker gespannt wird und die Masse (m1) der sich am Einbauende befindlichen Masse (36) und / oder die Steifigkeit (c1) des sich am Einbauende befindlichen Verbindungselementes (37) durch Materialabtrag oder -auftrag so verändert wird, dass ein Kompensations-Anzeigegerät optimale Werte anzeigt.

## Claims

1. An acceleration-compensated pressure absorber, for example for the measurement of dynamic events in gaseous or liquid media, wherein a pressure measuring element (5, 25, 35, 62) is assembled under prestress between two masses (4, 6; 23, 26; 33, 36) **characterized in that** the masses (33, 36) and the measuring element (35, 62) are connected merely at the assembling end via a flange (42) to a housing-like outer portion (31, 51), furthermore the masses [36 (m1), 33 (m2)] are connected to the flange (42) via connecting elements (40, 37; 77) having matched stiffnesses (c1, c2) to form an inner portion (45) which is decoupled from mechanical outer influences, and that eventually in the preassembled inner portion (45) masses (m1, m2) and/or stiffnesses (c1, c2) are adapted to each other by material removal or application in a way that acceleration or vibration effects, respectively, result only in a minimal interfering signal.

2. A pressure-absorber according to claim 1 **characterized in that** said flange (42) at the same time serves as a sealing surface during mounting into an engine wall (39).

3. A pressure-absorber according to claim 1 or 2 **characterized in that** said flange (42) is mounted, e.g. welded, frontally into a threaded portion (48) of the outer portion (31, 54).

4. A pressure-absorber according to any of the claims 1 to 3 **characterized in that** one (40) of the connecting elements (40,37; 77) consists of a closed tube or of ridges arranged in a cage-like manner while the other (37; 77) is a membrane having a preselected minimum stiffness (c1).

5. A pressure-absorber according to claim 4 **characterized in that** said membrane (77) is mounted, e.g. welded, integrally with the membrane bottom mass (36) frontally into the flange (42).

6. A pressure-absorber according to any of the preceding claims **characterized in that** the pressure measuring element is a crystal assembly (35) of piezoelectric ceramic or of piezoelectric single crystals assembled under prestress.

7. A pressure-absorber according to claim 6 **characterized in that** said ring-shaped crystal assemblies (35) or plate-like (62) crystal assemblies have been assembled which can be used up to ranges of 800°C.

8. A pressure-absorber according to any of the claims 1 to 5 **characterized in that** said pressure measuring element functions according to the piezoresistive, capacitive or optical principle.

9. A pressure-absorber according to any of the preceding claims **characterized in that** said inner portion (45) is additionally connected to the outer portion (51) via a transversal stabilizing membrane (76).

10. A method for coarse or fine adjustment of the acceleration compensation of an acceleration-compensated pressure absorber according to any of the claims 1 to 9 **characterized in that** said pressure measuring element (45) with the flange part (42) is tensioned onto a shaker and at least one of the limiting parameters, masses (m1, m2) of the two masses (33, 36) and stiffness (c1, c2) of the connecting elements (37, 40), is altered according to the measuring result.

11. A method for fine adjustment of the acceleration compensation of an acceleration-compensated pressure absorber according to any of the claims 1 to 9 **characterized in that** the ready assembled pressure absorber is tensioned onto a shaker and the mass (m1) of the mass (36) present at the assembling end and/or the stiffness (c1) of the connecting element (37) present at the assembling end is altered by means of material removal or application in a way that a compensation display instrument shows optimal values.

## Revendications

1. Capteur de pression avec compensation d'accélération, par exemple pour la mesure de processus dynamiques dans des milieux gazeux ou liquides, dans lequel un élément de mesure de la pression (5, 25, 35, 62) est incorporé entre deux masses (4, 6 ; 23, 26 ; 33, 36) avec tension de polarisation, **caractérisé en ce que** les masses (33, 36) et l'élément de mesure (35, 62) sont simplement reliés lors du montage, par une bride (42), avec une partie externe de type boîtier (31, 51), **en ce que** de plus, les masses [36(m1), 33(m2)] sont combinées par des éléments de liaison (40, 37 ; 77) avec rigidité adaptée (c1, c2) avec la bride (42) à une partie interne (45) découplée des influences mécaniques externes, et **en ce que** finalement, les masses (m1, m2) et/ou les rigidités (c1, c2) sont adaptées, dans la partie interne (45) prémontée par l'apport ou le départ de matière, l'une à l'autre de sorte que les influences d'accélération et respectivement, de vibration donnent au maximum un signal minimum d'interférence.

2. Capteur de pression suivant la revendication 1, **caractérisé en ce que** la bride (42) sert simultanément de surface d'étanchéité lors de l'incorporation dans une paroi de machine (39).

3. Capteur de pression suivant la revendication 1 ou 2, **caractérisé en ce que** la bride (42) est incorporée, par exemple soudée, de manière frontale, dans une partie taillée (48) de la partie externe (31, 54).

4. Capteur de pression suivant l'une quelconque des revendications 1 à 3, **caractérisé en ce que** l'un des éléments de liaison (40, 37 ; 77) consiste en un tube fermé ou en traverses disposées en forme de cage, alors que l'autre (37 ; 77) est une membrane avec une rigidité minimale choisie (c1).

5. Capteur de pression suivant la revendication 4, **caractérisé en ce que** la membrane (77) est incorporée, par exemple soudée, en une pièce, avec la masse au sol de membrane (36), de manière frontale, dans la bride (42).

6. Capteur de pression suivant l'une quelconque des revendications précédentes, **caractérisé en ce que** l'élément de mesure de pression est un jeu de cristaux (35) incorporé sous précontrainte mécanique, en céramique piézoélectrique ou un monocristal piézoélectrique.

7. Capteur de pression suivant la revendication 6, **caractérisé en ce que** des jeux de cristaux (35) de forme annulaire ou des jeux de cristaux de type plaque (62) sont incorporés, lesquels peuvent être utilisés jusqu'à environ 800°C.

8. Capteur de pression suivant l'une quelconque des revendications 1 à 5, **caractérisé en ce que** l'élément de mesure de pression travaille selon le principe piézorésistif, capacitif ou optique.

9. Capteur de pression suivant l'une quelconque des revendications précédentes, **caractérisé en ce que** la partie interne (45) est reliée en outre à la partie externe (51), par une membrane de stabilisation transversale (76).

10. Procédé d'adaptation sommaire ou fine de la compensation d'accélération d'un capteur de pression avec compensation d'accélération suivant l'une quelconque des revendications 1 à 9, **caractérisé en ce que** l'élément de mesure de pression (45) est monté avec la partie de bride (42) sur une table à secousses et au moins l'un des paramètres donnant la masse, une masse (m1, m2) des deux masses (33, 36) et une rigidité (c1, c2) de l'élément de liaison (37, 40) est modifié de manière correspondante au résultat de la mesure.

11. Procédé d'adaptation fine de la compensation d'accélération d'un capteur de pression avec compensation d'accélération suivant l'une quelconque des revendications 1 à 9, **caractérisé en ce que** le capteur de pression monté de manière fixe est monté sur une table à secousse et **en ce que** la masse (ml) de la masse (36) se trouvant sur l'installation et/ou la rigidité (c1) de l'élément de liaison (37) se trouvant sur l'installation est modifiée par l'apport ou le départ de matière de sorte qu'un indicateur de compensation présente une valeur optimale.
